# EUROPEAN PATENT SPECIFICATION

(11) **EP 0 699 303 B1**
(45) Date of publication and mention of the grant of the patent: **18.02.1998**
(21) Application number: 94917652.3
(22) Date of filing: 19.05.1994
(51) Int. Cl.: G01N 30/12

(54) **PROCESS AND DEVICE FOR GAS CHROMATOGRAPHIC ANALYSIS OF LARGE VOLUME SAMPLES**
VERFAHREN UND VORRICHTUNG FÜR DIE GASCHROMATOGRAPHISCHE ANALYSE GROSSVOLUMIGER PROBEN
PROCEDE ET DISPOSITIF D'ANALYSE DE VOLUMES IMPORTANTS D'ECHANTILLONS PAR CHROMATOGRAPHIE EN PHASE GAZEUSE

(30) Priority: 21.05.1993 IT MI931058
(43) Date of publication of application: 06.03.1996
(73) Proprietor: THERMOQUEST ITALIA S.p.A., 20090 Rodano (Milan) (IT)
(72) Inventor: GROB, Konrad, CH-8320 Fehraltorf (CH); MUNARI, Fausto, I-20100 Milan (IT)
(74) Representative: Gislon, Gabriele
(86) International application number: EP9401624
(87) International publication number: WO9428409

(56) References cited:
- JOURNAL OF HIGH RESOLUTION CHROMATOGRAPHY AND CHROMATOGRAPHY, vol.15, no.12, December 1992, HEIDELBERG DE pages 812 - 814, XP000343951 K. GROB ET AL. 'splitless injection of large volumes: improved carrier gas regulation system'
- JOURNAL OF HIGH RESOLUTION CHROMATOGRAPHY AND CHROMATOGRAPHY, vol.15, no.9, September 1992, HEIDELBERG DE pages 594 - 600, XP000331103 K. GROB ET AL. 'on-line solvent evaporator for coupled LC systems'
- JOURNAL OF HIGH RESOLUTION CHROMATOGRAPHY AND CHROMATOGRAPHY, vol.16, no.4, April 1993, HEIDELBERG DE pages 224 - 228 K. GROB ET AL. 'splitless injection of large volumes of aqueous samples - a basic feasibility study'
- JOURNAL OF HIGH RESOLUTION CHROMATOGRAPHY AND CHROMATOGRAPHY, vol.14, no.12, 1991, HEIDELBERG DE pages 649 - 655, XP000241453 WYLIE AT AL. 'improving splitless injection with electronic pressure programming' cited in the application

## Description

### BACKGROUND OF THE INVENTION

### FIELD OF THE INVENTION

The present invention relates to a process and a device for gas chromatographic analysis by injecting large volumes of samples containing compounds in traces, i.e. of samples having a small amount of compounds dissolved in a large amount of solvent. Namely, the invention relates to the analysis by using splitless injection mode for the compounds dissolved in the solvent, and particularly for injected samples volumes exceeding 5 microliters and separated by using capillary columns.

### DESCRIPTION OF THE PRIOR ART

As it is well known, two main methods for sample injection in gas chromatographic analysis are presently used, alternatively applied according to the analytical modes foreseen: vaporization injection and non vaporising direct on column injection, the so-called "cold on-column injection".

In the vaporization injection two different injection modes are used : the split mode and the splitless one, namely in absence of splitting. The sample injection is generally performed by means of a syringe. The syringe needle injects the sample through an elastomeric membrane (septum) into a glass liner positioned inside the vaporization chamber. In split injections, a considerable amount of the whole injected and vaporised sample is eliminated to the atmosphere through the splitting line; this kind of injection is used for relatively concentrated samples in order to avoid to introduce into the capillary gas chromatographic column too large amounts of sample; in the split injection glass liners filled with glass wool or a packing are commonly used.

If the concentration of the compounds to be analysed is low, it is necessary to use the other injection mode, the splitless one. This injection mode implies the transfer into the column of all the vapours of the sample components to be analysed in order to achieve the required sensitivity.

The conventional splitless injection takes place at constant temperature, such to allow the vaporization of all sample components, and therefore at a temperature definitely higher than the solvent boiling point. The vapours of the sample components, solvent included, are sent to the column during a preset time period called splitless time. During this period the vapours of the sample compounds are quantitatively transferred to the column.

Once this time is elapsed, the splitting valve (located in the lower portion of the injector) is opened and the excess of solvent, that has not been transferred into the column, is discharged to the atmosphere.

The splitless injection is usually performed by using empty glass liners. However, the use of glass liners with a glass wool cap was mentioned (Wylie et al. - Journal of High Resolution Chromatography 649-655 - Vol. 14, October 1991). According to said publication, the glass wool "seems to reduce discrimination, but can give rise to active sites that enhance the adsorption of polar compounds and catalyse the decomposition of labile molecules".

In order to avoid processes of discrimination of the heaviest components that take place in the conventional splitless injection, an injection technique with vaporization at programmed temperature (PTV) has been developed.

According to this technique the sample injection is carried out under cold conditions, at a starting temperature below the solvent boiling point and under a flow of carrier gas. Once the injection is performed, the injector body is heated in a programmed way to allow vaporization and transfer to the column the sample components.

It is thus possible to partially eliminate the solvent through a multi-step heating of the vaporiser chamber (PTV solvent splitting technique). To eliminate the solvent the vaporiser is heated to an intermediate temperature near the solvent boiling point before heating it to higher temperatures for transferring heavier sample compounds into the capillary column.

At this intermediate temperature the solvent is eliminated thanks to the carrier gas through the splitting valve, or in backflush, through another valve (PTV solvent splitting or PTV solvent backflushing).

The PTV solvent splitting technique was used for injection of large volumes of sample (solvents) by Vogt et al. J. Chromatogr, 174 (1979) 437 and by Termonia, Leumblez and Munari HRC & CC 11 (1988) 890.

Another PTV injection system for large amounts of sample is based on the solvent vaporization by the "overflow technique" type and is disclosed in European patent application n. 461438, corresponding to US Patent n. 5,174,149, both filed by the present applicants.

In this technique the injector vaporization chamber, of PTV type, is packed with a suitable material and heated to a starting temperature near the solvent boiling point. The sample injection is performed in temporary absence of carrier gas and in splitless configuration.

Under said conditions the solvent vapours escape to the atmosphere through the overflow valve placed on the purge line and located in the upper portion of the vaporiser chamber while the higher boiling components of the sample remain on the packing.

After a certain time the carrier gas flow through the vaporizing chamber is reactivated and the chamber temperature is increased to allow vaporization of said components and their passage into the chromatographic colums. During this transfer the vaporising chamber is kept in splitless configuration.

In K. Grob et al., JOURNAL OF HIGH RESOLUTION CHROMATOGRAPHY, vol. 15, n.12, 1992, 812-814, *"Splitless Injection of Large Volumes : Improved Carrier Gas Regulation System"*, is disclosed an injection process according to which a sample is injected in a packed vaporization chamber after interrupting the flow of carrier gas. The injector is a classical one with a split outlet and a septum purge line.

However, when large volumes are injected there is a dramatic loss of volatile compounds : for the same kind of compound, losses on injection of 50 µl are negligible but losses on injection of 2000 µl are 40%.

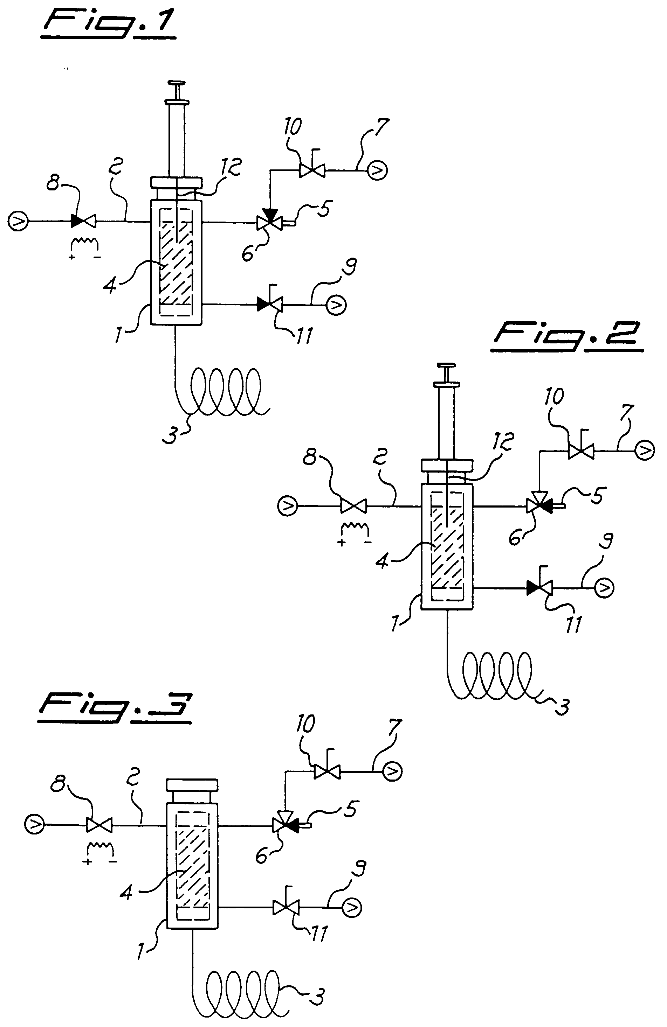

P.L.Wylie et al., JOURNAL OF HIGH RESOLUTION CHROMATOGRAPHY, vol.14, n.12, 1991, 649-655, *"Improving splitless Injection with Electronic Pressure Programming"* relates a method to reduce the loss of volatile compounds during GC analysis. According to this method said loss of compounds occurs when the carrier gas flow rate (or inlet pressure) is relatively low as shown in fig. 1A, because in this case volatile compounds can be lost through the septum purge line. The proposed solution is to increase the carrier gas flow rate to reach a condition according to fig. 1B and to inject the sample as quickly as possible.

### OBJECTS OF THE INVENTION

It is an object of the present invention to provide a process that allows to perform the vaporizing injection of' up to 2 ml of sample with a high injector temperature. A further object of the invention is to provide an injector device for carrying out the above mentioned process.

### SUMMARY OF THE INVENTION

Said objects are achieved by means of the present invention, that concerns a process to perform a gas chromatographic analysis through a capillary column according to claim 1.

A further object of the present invention is a gaschromatographic injector device according to claim 7.

According to a preferred feature of the invention, the inert materials are constituted by glass wool or quartz wool treated to make it inert or deactivated, for instance according to the method that will be described hereinbelow. Alternatively, it is possible to use a material that, besides having low thermal mass, has an effect of chromatographic retention on the substances to be analysed, specially at the low temperatures caused by the solvent evaporation. A suitable material is granular poly(para-2,6-diphenylphenylene oxide) (Tenax - AKZO Registered Trademark).

The above mentioned liquid intercepting means is used as an alternative to packing material, for stopping the injected liquid sample and retaining it within the vaporization chamber until complete evaporation of the sample. This means may be an insert fitted as a plug of glass or other inert material having a high thermal mass, into the liner. The insert can intercept the passage of liquid but allow the passage of vapours and, when heated will act according to the Leidenfrost phenomenon until the end of solvent vaporization.

### BRIEF DESCRIPTION OF THE DRAWINGS

The invention will be now described more in detail with reference to the accompanying drawings, given by way of illustration and with no limiting purposes, where:
- figures 1 to 3 are schematic representations of the injector portion of a device according to the invention during three different stages of the process according to the present invention;
- figure 4 is a graph showing the temperature course in the zone of the sample injection and vaporisation;
- figure 5 is a perspective, partially sectional view of a further embodiment of a detector according to the invention;
- figure 6 is a schematic view of another embodiment of the invention;
- figures 7 to 9 are chromatograms of GC analyses.

### DESCRIPTION OF THE PREFERRED EMBODIMENTS

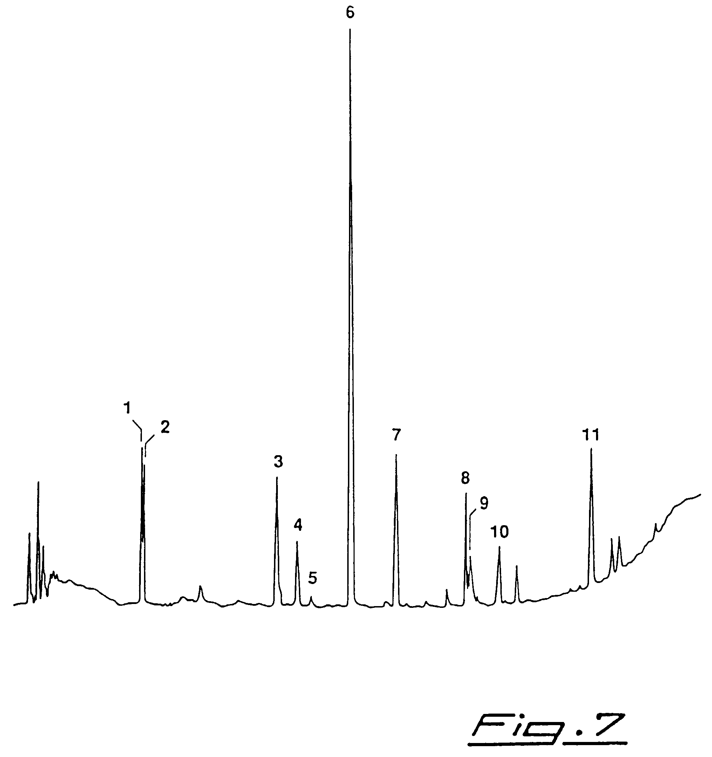

With reference first to figure 1, the injector device according to the invention comprises in a known way an injector 1, provided with means 1', 18 for heating the same (disclosed in fig. 5), that is connected upstream to a duct 2 for carrier gas feeding and downstream to a capillary column 3. The injector vaporization chamber is provided with a packing 4 that can be made by inerts alone or by inerts provided with stationary phase coating for the retention of the compounds present in the sample. Examples of materials that can be used are glass wool and Tenax (registered trademark).

The injector 1 is also connected to vapour discharge means, comprising three-way valve 6 and a first exhaust line 5, called "solvent vapours purge line" having low fluidic resistance and therefore ensuring high flow rates, and to a second purge line 7, i.e. the "septum purge line" having higher fluidic resistance and consequently lower flow rate. The resistance of this line is adjusted by means of a needle valve and is selected so as to insure flow rates of the same order of magnitude as those passing through the column 3. An on-off valve 10 of the needle type is positioned on the second purge line 7 to close it when required.

Duct 2 is provided with a valve 8 to cut out the carrier flow to the injector according to the hereunder described procedure. In the lower portion of the injector there is provided a splitting line 9, also known per se in the art, on which an on/off needle valve 11 is provided.

According to the process of the invention, to perform the splitless analysis (i.e. in absence of splitting) of a sample having high volume, namely up to 2 ml, injector 1 is heated up to a temperature sufficient to vaporising and transferring into the GC column the most high-boiling part of the sample to be analized (typically 200-350°C). Then the sample injection is started by using a syringe provided with a needle 12 that is introduced into the packing 4 in a position that is a function of the type of solvent used and such as to avoid to introduce liquid sample into'the column 3. Means for sample introduction at programmable speed will be preferably used.

According to the present invention, the injection is carried out at a speed value that ranges between 10 and 200 µl/second.

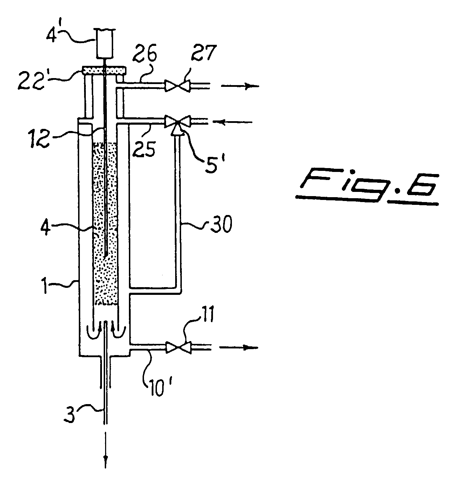

As soon as the liquid sample is injected into packing material 4, solvent evaporation and the resulting cooling of the packing material area surrounding the injection point occurs, as generally shown in figure 4 by the curve between points A and B. It is important to perform this step as fast as possible from the beginning of injection, (point A of figure 4), in order to reach as soon as possible the condition of balance represented by the straight line B-C of figure 4. An appropriate injection speed for the stage A-B is above 100 µl/sec.

During this second step there is a substantial balance between the volume of injected sample and evaporated solvent, and the injection speed is kept constant in order to avoid that an excessive volume of liquid sample accumulates in the injector and enters the column 3 therefrom. The injection speed in this stage is preferably from 10 to 100 µl/sec.

When finally all the sample has been injected, the temperature of the injection zone of the packing rises (curve C-D) until it reaches the initial one, namely the steady state temperature of the injector.

It has been noticed that, though it is preferable to adopt a variable injection speed according to what previously indicated, it is possible to run acceptable analyses by programming a constant injection speed of up to 200 µl/second.

Figure 1 shows the arrangement of valves during the stages of injection and vaporization. As it can be noted, the valve 8 has been switched off to cut out the carrier flow to the injector 1, the splitting valve 11 is also closed and the valve 6 is switched to connect the injector to purge line 5. The valve 10 can be indifferently in open or closed position, line 7 being in any case cut out by the valve 6.

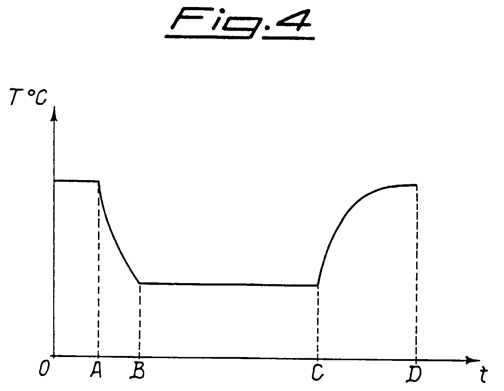

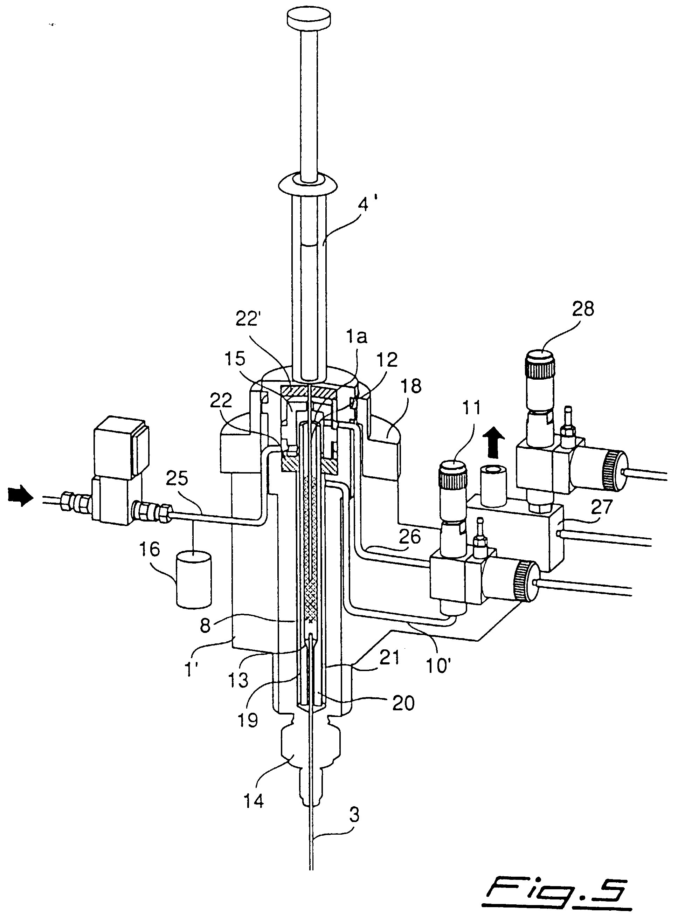

After the injection and the vaporization of the solvent, the configuration shown in figure 2 is obtained, where the valve 8 is open and the valve 6 is switched in a way to connect the injector 1 to the second purge line 7 having reduced section and high resistance. If the septum purge mode is required, valve 10 is open, otherwise it is closed. The valve 11 is still closed, thus obtaining the classical configuration of splitless mode injection. At this step the compounds of interest are sent to the column 3. Once compounds of interest (that may possibly be only part of those present in the sample) are sent to the column, the valve 11 is switched to the open position, obtaining a splitting configuration (figure 3).

Valves 8 and 6 are preferably actuated at a time t (measured from start injection) such that
2 s ≤ t < t-splitless where 2s means 2 seconds from the beginning of injection (namely from the introduction of the needle into the injector) and t-splitless corresponds to the time elapsed between the start of the injection and the opening of the splitting line.

The actuation of valves can be synchronous, asynchronous or in another preferred sequence.

In this way it has been found possible to perform analyses by capillary gas chromatography of samples with liquid volumes such as to generate amounts of vapours not containable inside the vaporization chamber, particularly liquid volumes up to 2 ml. Furthermore, it is possible to use polar solvents as well, including water, in large quantities.

To carry out the process according to the invention the presence of inerts 4 is required to keep the sample in liquid phase until it evaporates, mainly if said sample has a large volume, as a function of the surface area of the inerts themselves. A preferred inert is a packing of poly(para-2,6-diphenylphenylene oxide) (Tenax - AKZO Registered Trademark).

Another preferred inert is silanised glass or quartz wool, e.g. in an amount of about 20-80 mg.

In order to obtain the required performances of said glass or quartz wool, this is preferably inactivated, following a process that is similar to that used for the preparation of glass or fused silica capillary columns. For quartz wool the process substantially comprises the following steps:
- addition to the wool of a few µl of 8% HCl and heating to 270 degrees C for one hour in closed glass tube;
- drying at 270 degrees C for 5 minutes under inert gas flow;
- immersion in 1:2 solution of (hexamethyldisilazane + diphenyltetramethyldisilazane) in pentane and heating to 320 degrees C in closed glass tube for 24 hours;
- washing with toluene and methanol and drying.

Figure 5 shows an operative embodiment of an injector for the process according to the invention. Said injector comprises a body 1' of the injector, inside which there is provided a vaporization chamber la defined by an external housing 19 where a calibrated glass tube 20 (glass liner) is inserted, leaving a hollow space 21 for splitting through duct 10', as disclosed hereinafter. An upper sealing gasket 22 closes the hollow space 21. The glass liner 20 has preferably an inner diameter within the range from 2 to 8 mm. Liner 20 is tapered towards the bottom, as indicated by reference 13, for connection to the gas chromatographic capillary column 3, constrained by a blocking insert 14. In the upper section, the vaporization chamber la has a non tapered end that is housed in a small block 15 for distribution of flows and washing of the septum, known per se. The block 15 has a hole in correspondence to said septum 22' that can be pierced for instance by the needle 12 of a known injection syringe 4'. It also has communication ducts in correspondence to carrier gas inlet and purge line outlet.

Within glass liner 20 there is provided glass or quartz wool, deactivated as previously mentioned, or the packing material.

It should be noted that in the present description and in the claims, "vaporization chamber" is used to indicate in general the seat where the sample vaporization occurs, in the illustrated example defined by the glass liner 20. Within body 1' of the injector there are provided different ducts leading to the seat housing the liner that defines the vaporization chamber. Said ducts are a duct 25 to feed carrier gas that is fed at constant pressure. Said duct 25 is provided with a pressure sensor 16 whose function will be described hereinbelow and with an electrovalve for switching off the carrier feed to the ijector. Within the body 1' of the injector, there is an exhaust line 26 for venting the solvent vapours. Line 26 has, in proximity to its outlet a controlling valve 27, preferably a pneumatic three-way valve. The pneumatic valve 27 has two outlets, one for solvent vapours discharge, or purge, directly connected to atmosphere, and the other for septum purge, connected with a valve 28. This valve has built in a needle valve in series with a pin hole, pneumatically actuated on-off valve. In the low resistance outlet for solvent vapours discharge, downstream to valve 27, a detector can be installed (e.g. a thermoconductivity detector) to monitor the solvent vaporization process by sensing the variation of solvent vapours in time. A third duct 10' defines a usual splitting line, closed by a valve 11. In a preferred embodiment, valve 27 is the three-way valve disclosed in figures 1 to 3 with reference 6.

This injector is designed on the basis of a system, known per se, of split-splitless vaporizing with modifications that have the purpose to ensure : a) an appropriate elimination of the solvent vapours through the exhaust line 26 during the solvent vaporization, avoiding the solvent condensation; and b) a monitoring of the evaporation process with indication of the end of the solvent evaporation stage in order to possibly automate the injection procedure.

To achieve said objects, exhaust line 26 should be heated to avoid any condensation of the solvent therein. Said heating is obtained by means of the body 1' of the injector as well as by a special heat conducting body 18 mounted on the upper portion of the injector, the body 18 and body 1' being possibly provided with an insulating lining (not shown). For the same reasons valve 27 as well should be heated at least in its portion near line 26. Moreover said valve must guarantee a chemical inertia not altering its characteristics because of the long lasting contact with solvent vapors and must moreover avoid the danger of fire for large quantities of solvent vapours passing therethrough. Therefore pneumatic valves or special electric valves are preferable.

In order to have a suitable elimination of vapours, line 26 must be sufficiently wide (diameter 0.4 mm or more) and short (30 cm or less) not to create a too high fluidic resistance to the solvent that has greater viscosity than that of the carrier gas.

Moreover, in order that the process of the solvent evaporation does not affect the preset temperature of the vaporization chamber, the quantity of conveyed heat must be such as to prevent any reduction of the selected temperature. It will therefore be necessary to guarantee the proper amount of heat depending on the selected temperature, the injected quantity, the mass of the injector, the injector speed and the speed of heat transfer to the chamber. In practice, an injector body made of aluminium is used with two heating resistors with total capacity preferably exceeding 150 W.

The monitoring of the vaporization process can be performed through a suitable detector located on the low fluidic resistance overflow line, downstream valve 27. Said outlet line can be connected in any suitable way to a detector that has the purpose of detecting when the stage of solvent vaporization and the elimination of solvent vapours is over, thus allowing an appropriate timing of the process steps and their automation.

At the end of solvent evaporation step the valve 27 is switched, so as to connect purge line 26 to valve 28 and the cited high resistance outlet line. The residual solvent vapours present in the purge line are discharged through this line, generally used for septum purge. In alternative or in addition to the monitoring of the solvent through a detector (e.g. a thermoconductivity detector, TCD) a second monitoring can be foreseen through the pressure sensor 16. In fact, during the stage of the solvent vaporization, a pressure increase inside the vaporization chamber occurs. Said increase is recorded by the sensor. The end of the solvent vaporization step corresponds to pressure recovering its initial value that is detected by the sensor. Still with the purpose of detecting the end of the solvent vaporization stage it is possible to envisage a probe (not shown) that detects the temperature of the vaporization chamber or the liner in the zone of the injection, and the increase of said temperature occurring at the end of the solvent vaporization stage.

The injector of figure 5 performs the process of the invention in the following way.

The system is set at the selected temperature with valve 27 connected to the low fluidic resistance outlet (corresponding to ref. 5 of fig. 1-3) and valves 8 (see fig.1) and 11 closed. The sample is injected in a controlled way as indicated above. If a large sample amount is injected, it is preferable to monitor the solvent evaporation to select the most appropriate time to switch on valve 8 and switch valve 27 to high fluidic restance line and valve 28. In such a case, solvent evaporation is monitored by means of the cited systems (TCD detector and/or pressure sensor 16 and/or temperature probe). In absence of said systems monitoring is carried out in an experimental way. At the end of the evaporation step, the step of sample transfer begins, preferably after valve 8 is opened and valve 27 is switched to the high resistance line. The transfer time (splitless time) is evaluated in a way similar to the process used in the conventional splitless injection, then opening the splitting valve 11 when the most high-boiling compounds have reached the capillary column. In such a way, the total splitless (injection) time is equivalent to the solvent vaporization time (t VAP) plus the transfer time under splitless conditions (t TR).

Alternatively to what described above, it is possible to use vacuum applied at the low resistance outlet (5) of duct 26 (i.e. to solvent vapours exhaust line) to accelerate the solvent vaporization and to prevent solvent vapours from entering the capillary column. The vacuum is automatically removed when the valve 27 is switched from the solvent vapours exhaust outlet to the septum purge outlet.

The operation of on-off valve 8, to avoid penetration of solvent vapours into duct 5, can also be carried out automatically in consequence of the monitoring of said step.

Figure 6 shows a modified embodiment of the invention, in which the carrier gas valve 5' can be switched to send a carrier gas flow to a duct 30 connected to the lower portion of the vaporization chamber in order to have said carrier gas moving upwards in a backflushing mode, so as to wash the chamber and sweep away the heavy compounds possibly not to be analysed through GC column.

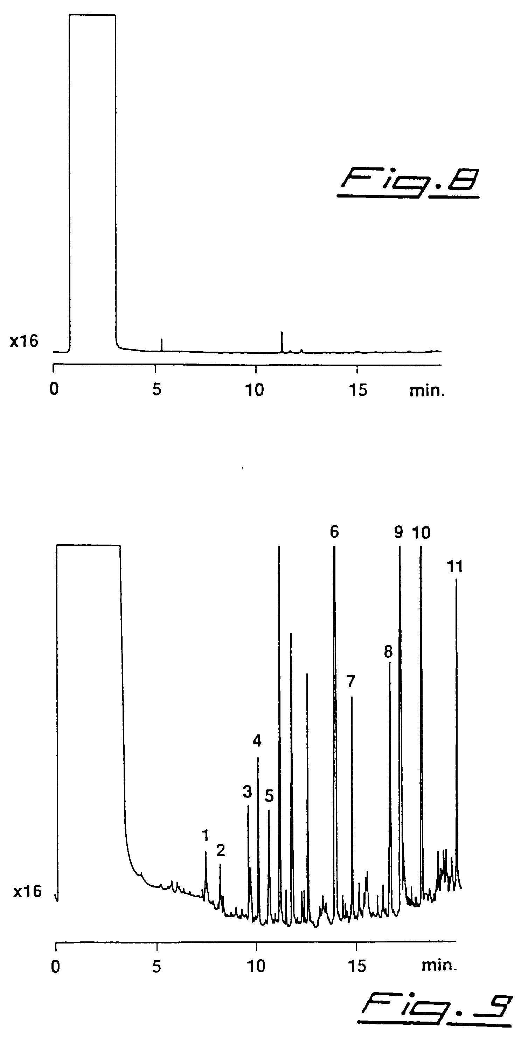

Figure 7 illustrates a chromatogram obtained by injecting a sample of 150 microliters of phenols mixture in water with a concentration of 90-400 pg/µl, according to the process of the present invention.

Figures 8 and 9 are two chromatograms obtained starting from the above phenol mixture in methylene chloride, injected in 1.2 µl amount, with concentration of 100-500 pg/µl, according to the conventional technique (fig. 8) and in 300 µl amount, with concentration of 1-5 pg/µl according to the technique of the present invention (fig. 9). In the chromatograms, reference numbers indicate: 1: phenol; 2: 2-chlorophenol; 3: 2-nitrophenol; 4: 2,4-dimethylphenol; 5: 2,4-dichlorophenol; 6: naphthalene; 7: 3-methyl-4-chlorophenol; 8: 2,4,5-trichlorophenol; 9: 2,4-dinitrophenol; 10: 4-nitrophenol; 11: 2-methyl-4,6-dinitrophenol; 12: pentachlorophenol; 13: phenanthrene. Operative conditions were as follows:
- splitless injection time = 180 seconds
- carrier fluid = helium
- carrier flow rate = 1.5 ml/min
- injector temperature = 300 °C
- GC detector = Flame Ionization (320 °C)
- temperature program of the oven = fig. 7 : 110°C (2 min) at 10 °C/min up to 280 °C (2 min); fig. 8 : 50 °C (2 min) up to 250 °C; fig. 9 : 70 °C (2 min) up to 250 °C.

The comparison between the two chromatograms represented in figures 8 and 9 immediately shows the ease of determination, in the second one, of compounds present in traces in the sample.

## Claims

1. A process to perform a capillary column gas chromatographic analysis of the type comprising the steps of vaporisation injecting a sample in an injector (1) containing packing material (4) and heated to a temperature sufficient for vaporization and fully transfer into said capillary column (3) of the most high-boiling part of the sample to be analysed; and of closing the carrier gas feeding (2) to said injector; characterized in further comprising the steps of:
selecting and/or programming an injection speed of the sample within the range from 10 to 200 µl/sec; performing the sample injection at said injection speed to have liquid sample on inert packing material (4) or liquid intercepting means located within the injector (1) during said injection step; discharging the vapours thus formed through a vapour discharge means (5, 6) ; heating the upper portion of said injector and at least a portion of said vapour discharge means; reducing or interrupting the flow rate through said vapour discharge means (6, 10) and feeding again the injector with said carrier gas when the evaporation of the solvent is substantially over, in order to transfer the compounds to be analysed from said injector (1) to said gas chromatographic capillary column (3).

2. A process according to claim 1, wherein said steps of reducing or interrupting the flow rate through said discharge means (5, 6, 7) and feeding again carrier gas to the injector (1) are effected in an asynchronous sequence.

3. A process according to claim 1 or 2, wherein a variable injection speed is programmed to comprise a first step of sample introduction at a speed sufficient to cool at least the injection zone of said sample and a second step of injection at constant speed.

4. A process according to claim 1 or 2, wherein a constant injection speed is selected and/or programmed.

5. A process according to any previous claim, wherein at the end of the transfer to said column (3) of the compounds to be analysed, said injector is connected to a splitting line (9) opened to the atmosphere.

6. A process according to claim 5, wherein the flow rate through said vapour discharge means is decreased and/or said carrier gas is again fed to the injector (1) at a time t corresponding to
2 s t < t-splitless where 2s means two seconds from the beginning of the injection and t-splitless is the time elapsed from the injection start to the opening of the splitting line (9).

7. A gaschromatographic injector device for injection of samples having compounds dissolved in liquid solvent means, comprising: a vaporization chamber (19-21) closed by a septum (22') and connected, on the opposite side, to a gas chromatographic column (3); heating means (1') for heating said chamber; inlet means (2, 25) to feed carrier gas to the upper portion of said chamber; vapour discharge means (5-7,10 ; 27) connected to the upper portion of said chamber to discharge vapors of said solvent and comprising an exhaust line (26); characterized in comprising:
inert packing material (4) or liquid intercepting means having reduced thermal mass located within said vaporization chamber; second heating means (18) to heat the upper portion of the injector, the septum (22') and at least a portion of the exhaust duct (26) at a temperature higher than that of recondensation of the solvent vapours; and means of selecting and/or programming an injection speed within the range of 10 to 200 µl/sec.

8. An injector according to claim 7, wherein said second heating means comprise a block (18) of a heat conducting material, in thermal exchange with at least the greatest length of said exhaust line (26), with the upper portion of the injector (1) and with the first heating means.

9. An injector according to claim 8, having an insulating lining on the external surface of at least one of said blocks (1', 18) made of heat conducting material.

10. An injector according to claim 7, wherein a three-way control valve (27) is associated with said exhaust line (26), said valve having heating means to be heated at temperature higher than that of recondensation of the solvent vapours, and provided with first outlet (5) having a first fluidic resistance and a second outlet (7) having a second fluidic resistance, said second fluidic resistance being greater than said first fluidic resistance, one or both outlets being connectable to a vacuum source.

11. An injector according to one of the claims 7 to 10, wherein said exhaust line (26) has an inner diameter within the range from 0.4 to 2 mm and a length of 30 centimeters or less.

12. An injector according to any claim 7 to 11, wherein the vaporization chamber (19, 21) has an inner diameter within the range from 2 to 8 mm.

13. An injector according to any claim 7 to 12, comprising means for detecting the end of the step of solvent evaporation and discharge, selected from a detector located downstream to the exhaust line, a pressure sensor (16) located on the duct (25) feeding carrier gas to the vaporization chamber, and a temperature sensor located within the vaporization chamber, adjacent to the sample injection point.

14. An injector according to claim 13, wherein said detector is a thermal conductivity detector.

15. An injector according to any claim 7 to 14, comprising a valve (8) to control the carrier gas feeding, acting on the relevant duct.

16. An injector according to any claim 7 to 15, wherein said inerts (4) are selected from deactivated glass or quartz wool and a packing material having effect of chromatographic retention.

17. An injector according to claim 16, wherein said packing material (4) is poly(para-2,6-diphenylphenylene oxide) (Tenax - AKZO Registered Trademark).

18. An injector according to any claim 7 to 17, comprising a splitting line (9, 10') connected to the vaporization chamber and controlled by valve means (11) capable of determining the closure thereof.

## Patentansprüche

1. Verfahren zum Durchführen einer Kapillarsäulengaschromatographieanalyse, umfassend die Schritte der Verdampfunginsjektion einer Probe in einem injektor (1), der Füllmaterial (4) enthält und auf eine Temperatur erwärmt wird, die zur Verdampfung und vollständigen Überführung des größten Teiles des hochsiedenden Teiles der zu analysierenden Probe in die Kapillarsäule (3) ausreichend ist; und des Schließens der Trägergaszuführung (2) zum Injektor; gekennzeichnet dadurch, daß es außerdem die Schritte umfaßt:
Auswählen und/oder Programmieren einer Injektionsgeschwindigkeit der Probe im Bereich von 10 bis 200 µl/sec; Ausführen der Probeninjektion mit dieser Injektionsgeschwindigkeit, um während des Injektionsschrittes auf dem im Injektor (1) angeordneten inerten Füllmaterial (4) oder Flüssigkeitssammelmittel die flüssige Probe zu erhalten; Austragen des so gebildeten Dampfes durch ein Dampfaustragsmittel (5, 6); Erwärmen des oberen Teiles des Injektors und mindestens eines Teiles des Dampfaustragsmittels; Reduzieren oder Unterbrechen der Durchflußmenge durch das Dampfaustragsmittel (6, 10) und erneutes Speisen des Injektors mit dem Trägergas, wenn die Verdampfung des Lösungsmittels im wesentlichen vorüber ist, um die zu analysierenden Verbindungen vom Injektor (1) zur Gaschromatographiekapillarsäule (3) zu überführen.

2. Verfahren gemäß Anspruch 1, bei dem die Schritte des Reduzierens oder Unterbrechens der Durchflußmenge durch das Austragsmittel (5, 6, 7) und erneuten Zuführens von Trägergas in den Injektor (1) in einer asynchronen Aufeinanderfolge bewirkt werden.

3. Verfahren gemäß Anspruch 1 oder 2, bei dem eine veränderliche Injektionsgeschwindigkeit programmiert wird, um einen ersten Schritt der Probeneinführung mit einer Geschwindigkeit, die ausreichend ist, um mindestens die Injektionszone der Probe zu kühlen, und einen zweiten Schritt der Injektion mit konstanter Geschwindigkeit einzuschließen.

4. Verfahren gemäß Anspruch 1 oder 2, bei dem eine konstante Injektionsgeschwindigkeit ausgewählt und/oder programmiert wird.

5. Verfahren gemäß einem der vorhergehenden Ansprüche, bei dem der Injektor an dem Ende der Überführung der zu analysierenden Verbindungen zur Säule (3) an eine zur Atmosphäre offene Splitleitung (9) angeschlossen ist.

6. Verfahren gemäß Anspruch 5, bei dem die Durchflußmenge durch das Dampfaustragsmittel verringert und/oder das Trägergas erneut dem Injektor (1) zu einer Zeit t zugeführt wird, die
2 s < t < t-splitlos entspricht, worin 2s zwei Sekunden vom Beginn der Injektion bedeuten und t-splitlos die Zeit ist, die vom Injektionsbeginn bis zum Öffnen der Splitleitung (9) vergeht.

7. Gaschromatographie-Injektoreinrichtung zur Injektion von Proben, die in flüssigen Lösungsmitteln gelöste Verbindungen besitzen, umfassend: eine Verdampfungskammer (19-21), die durch ein Septum (22') verschlossen und auf der gegenüberliegenden Seite an eine Gaschromatographiesäule (3) angeschlossen ist; Heizmittel (1') zum Erwärmen der Kammer; Einlaßmittel (2, 25) zum Zuführen von Trägergas zum oberen Teil der Kammer; Dampfaustragsmittel (5-7, 10; 27), die zum Austragen von Dämpfen des Lösungsmittels an dem oberen Teil der Kammer angeschlossen sind und eine Abdampfleitung (26) umfassen; gekennzeichnet dadurch, daß sie umfaßt:
in der Verdampfungskammer angeordnetes, inertes Füllmaterial (4) oder ein Flüssigkeitssammelmittel, das eine reduzierte thermische Masse hat; zweite Heizmittel (18) zum Erwärmen des oberen Teiles des Injektors, des Septums (22') und mindestens eines Teiles der Abdampfleitung (26) auf eine höhere Temperatur als jene der Rückverflüssigung der Lösungsmitteldämpfe; und Mittel zum Auswählen und/oder Programmieren einer Injektionsgeschwindigkeit im Bereich von 10 bis 200 µl/sec.

8. Injektor gemäß Anspruch 7, bei dem das zweite Heizmittel einen Block (18) aus einem wärmeleitfähigen Material in Wärmeaustausch mit mindestens der überwiegenden Länge der Abdampfleitung (26), dem oberen Teil des Injektors (1) und dem ersten Heizmittel umfaßt.

9. Injektor gemäß Anspruch 8, der auf der Außenfläche von mindestens einem der aus einem wärmeleitfähigen Material hergestellten Blöcke (1', 18) einen Isolierbelag besitzt.

10. Injektor gemäß Anspruch 7, bei dem ein Drei-Wege-Regelventil (27) mit der Abdampfleitung (26) verbunden ist, wobei das Ventil Heizmittel zum Erwärmen auf eine höhere Temperatur als jene der Rückverflüssigung der Lösungsmitteldämpfe besitzt und mit einem ersten Auslaß (5), der einen ersten Strömungswiderstand besitzt, und einem zweiten Auslaß (7) versehen ist, der einen zweiten Strömungswiderstand besitzt, wobei der zweite Strömungswiderstand größer ist als der erste Strömungswiderstand, wobei einer oder beide Auslässe an eine Vakuumquelle anschließbar sind.

11. Injektor gemäß einem der Ansprüche 7 bis 10, bei dem die Abdampfleitung (26) einen Innendurchmesser im Bereich von 0,4 bis 2 mm und eine Länge von 30 cm oder weniger besitzt.

12. Injektor gemäß einem der Ansprüche 7 bis 11, bei dem die Verdampfungskammer (19, 21) einen Innendurchmesser im Bereich von 2 bis 8 mm besitzt.

13. Injektor gemäß einem der Ansprüche 7 bis 12, umfassend Mittel zum Ermitteln des Endes des Schrittes der Lösungsmittelverdampfung und -austrages, ausgewählt aus einem stromabwärts der Abdampfleitung angeordneten Detektor, einem Drucksensor (16), der an dem Rohr (25) angeordnet ist, das der Verdampfungskammer Trägergas zuführt, und einem Temperatursensor, der in der Verdampfungskammer neben dem Probeninjektionspunkt angeordnet ist.

14. Injektor gemäß Anspruch 13, bei dem der Detektor ein wärmeleitfähiger Detektor ist.

15. Injektor gemäß einem der Ansprüche 7 bis 14, der ein Ventil (8) zum Regeln der an dem entsprechenden Rohr wirksamen Trägergaszuführung umfaßt.

16. Injektor gemäß einem der Ansprüche 7 bis 15, bei dem die inerten Stoffe (4) aus desaktivierter Glas- oder Quarzwolle und ein Füllmaterial ausgewählt wird, das die Wirkung der chromatographischen Retention aufweist.

17. Injektor gemäß Anspruch 16, bei dem das Füllmaterial (4) Poly(para-2,6-diphenylphenylenoxid) (Tenax- eingetragenes Warenzeichen der Akzo) ist.

18. Injektor gemäß einem der Ansprüche 7 bis 17, der eine Splitleitung (9, 10') umfaßt, die an die Verdampfungskammer angeschlossen ist und durch Ventilmittel (11) geregelt wird, die fähig sind, deren Schließung zu bestimmen.

## Revendications

1. Procédé pour effectuer une analyse par chromatographie en phase gazeuse en colonnes capillaires, du type comprenant les phases d'injecter à vaporisation un échantillon dans un injecteur (1) contenant du matériel remplissant (4) et chauffé à une température suffisante pour la vaporisation et le transfert complet dans ladite colonne capillaire (3) de la partie la plus haute-bouillante de l'échantillon à analyser; et d'arreter l'alimentation du gaz vecteur(2) audit injecteur; caractérisé en ce qu'il comprend aussi les phases de:
sélectionner et/ou programmer une vitesse d'injection de l'échantillon dans un intervalle de 10 à 200 µl/sec: effectuer l'injection de l'échantillon à ladite vitesse d'injection pour obtenir un échantillon liquide sur du matériel remplissant inerte (4) ou sur des moyens d'interception de liquide placés dans l'injecteur (1) pendant ladite phase d'injection; décharger les vapeurs obtenues à travers des moyens de décharge de vapeur (5, 6); chauffer la partie supérieure dudit injecteur et au moins une partie desdits moyens de décharge de vapeur; réduire ou couper le débit à travers lesdits moyens de décharge de vapeur (6, 10) et alimenter de nouveau l'injecteur avec ledit gaz vecteur, lorsque l'évaporation du solvant est substantiellement terminée, dans le but de transférer les composés à analyser dudit injecteur (1) à ladite colonne capillaire (3) de l'appareil de chromatographique en phase gazeuse.

2. Procédé selon la revendication 1, caractérisé en ce que lesdites phases de réduire ou couper le débit à travers lesdits moyens de décharge (5, 6, 7) et d'alimenter de nouveau du gaz vecteur à l'injecteur (1) sont effectuées dans une séquence asynchrone.

3. Procédé selon la revendication 1 ou 2, caractérisé en ce qu'une vitesse variable d'injection est programmée pour prévoir une première phase d'injection de l'échantillon à une vitesse suffisante pour refroidir au moins la zone d'injection dudit échantillon et une deuxième phase d'injection à vitesse constante.

4. Procédé selon la revendication 1 ou 2, caractérisé en ce qu'une vitesse d'injection constante est choisie et/ou programmée.

5. Procédé selon l'une quelconque des revendications qui précèdent, caractérisé en ce qu'à la fin du transfert des composés à analyser à ladite colonne (3), ledit injecteur est relié à un conduit de séparation (9) ouvert vers l'atmosphère.

6. Procédé selon la revendication 5, caractérisé en ce que le débit à travers lesdits moyens de décharge de vapeur est réduit et/ou ledit gaz vecteur est alimenté de nouveau à l'injecteur (1) à un temps t qui correspond à
2 s < t < t-sans séparation (splitless) où 2s représente deux secondes à partir du début de l'injection et t-splitless est le temps écoulé du début de l'injection jusqu'à l'ouverture du conduit de séparation (9).

7. Dispositif d'injection pour chromatographie en phase gazeuse pour l'injection d'échantillons ayant des composés dissous dans un solvant liquide, comprenant: une chambre à vaporisation (19-21) fermée par un septum (22') et reliée, du côté opposé, à une colonne pour chromatographie en phase gazeuse (3); des moyens de chauffage (1') pour chauffer ladite chambre; des moyens d'entrée (2, 25) pour alimenter du gaz vecteur à la partie supérieure de ladite chambre; des moyens de décharge de vapeur (5-7, 27) reliés à la partie supérieure de ladite chambre pour décharger les vapeurs dudit solvant et comprenant un conduit de décharge (26); caractérisé en ce qu'il comprend: du matériel remplissant inerte (4) ou des moyens d'interception de liquides, ayant une masse thermique réduite, placés dans ladite chambre à vaporisation; des deuxièmes moyens de chauffage (18) pour chauffer la partie supérieure de l'injecteur, le septum (22') et au moins une partie du conduit de décharge (26) à une température plus élevée que la température de recondensation des vapeurs du solvant; et des moyens pour selectionner et/ou programmer une vitesse d'injection dans un intervalle de 10 à 200 µl/sec.

8. Injecteur selon la revendication 7, caractérisé en ce que lesdits deuxièmes moyens de chauffage comprennent un bloc (18), fait d'un matériau conducteur de chaleur, en condition d'échange thermique avec au moins la portion la plus longue dudit conduit de décharge (26), avec la partie supérieure de l'injecteur (1) et avec les premiers moyens de chauffage.

9. Injecteur selon la revendication 8, pourvu d'un revêtement isolant sur la surface extérieure d'au moins un desdits blocs (1', 18) en matériau conducteur de chaleur.

10. Injecteur selon la revendication 7, caractérisé en ce qu'une vanne de commande à trois voies (27) est reliée audit conduit de décharge (26), ladite vanne étant pourvue de moyens de chauffage pour être chauffée à une température plus élevée que celle de recondensation des vapeurs du solvant, et pourvue d'une première sortie (5) ayant une première résistance aux fluides et d'une deuxième sortie (7) ayant une deuxième résistance aux fluides, ladite deuxième résistance aux fluides étant plus élevée que ladite première résistance aux fluides, l'une ou les deux sorties étant reliables à une source de vide.

11. Injecteur selon l'une des revendications de 7 à 10, caractérisé en ce que ledit conduit de décharge (26) a un diamètre interne compris entre 0,4 et 2 mm et une longueur de 30 centimètres ou moins.

12. Injecteur selon l'une des revendications de 7 à 11, caractérisé en ce que la chambre de vaporisation (19, 21) a un diamètre interne compris entre 2 et 8 mm.

13. Injecteur selon l'une des revendications 7 à 12, comprenant des moyens pour détecter la fin de la phase d'évaporation et de décharge du solvant, choisis parmi un détecteur placé en aval du conduit de décharge, un détecteur de pression (16) placé sur le condit (25) alimentant le gaz vecteur à la chambre de vaporisation et un détecteur de température placé à l'intérieur de la chambre de vaporisation, à côté du point d'injection de l'échantillon.

14. Injecteur selon la revendication 13, caractérisé en ce que ledit détecteur est un détecteur à conductibilité thermique.

15. Injecteur selon l'une des revendications 7 à 14, comprenant une vanne (8) pour contrôler l'alimentation du gaz vecteur, agissant sur le conduit correspondant.

16. Injecteur selon l'une des revendications 7 à 15, caractérisé en ce que lesdits matériaux remplissants inertes (4) sont choisis entre verre désactivé ou laine de quartz et un matériau remplissant ayant un effet de rétention chromatographique.

17. Injecteur selon la revendication 16, caractérisé en ce que ledit matériau remplissant (4) est du poly(para-2,6-diphénylphénylène oxyde) (Tenax - AKZO marque déposée).

18. Injecteur selon l'une des revendications 7 à 17, comprenant un conduit de séparation (9, 10') relié à la chambre de vaporisation et contrôlé par une vanne (11) apte à déterminer sa fermeture.
